# EUROPEAN PATENT APPLICATION

(11) **EP 4 753 162 A1**
(43) Date of publication of application: **03.06.2026**
(21) Application number: 25154375.7
(22) Date of filing: 28.01.2025
(51) Int. Cl.: H04B 7/04

(54) **REFLECTION DEVICE FOR WIRELESS COMMUNICATION, WIRELESS COMMUNICATION APPARATUS, SYSTEM, AND OPERATING METHOD**

(30) Priority: 29.11.2024 EP 24216598
(71) Applicant: IHP GmbH - Innovations for High Performance Microelectronics / Leibniz-Institut für innovative Mikroelektronik, 15236 Frankfurt (Oder) (DE)
(72) Inventor: Grass, Eckhard, 15236 Frankfurt (Oder) (DE); Maletic, Nebojsa, 15236 Frankfurt (Oder) (DE)
(74) Representative: Eisenführ Speiser

(57) **Abstract**

A reflection device for wireless communication comprises a two-dimensional array of reflective elements (109,119) and a control device (111,120) for controlling the multiple reflective elements such that the multiple reflective elements reflect the impinging electromagnetic waves in a phase-controlled fashion into a selectable reflection angle. The reflection device is configured to reflect and transform impinging electromagnetic waves having a first type of waveform, e.g. plane waves, such that the reflected electromagnetic waves have a second type of waveform, e.g. orbital angular momentum (OAM) waves, and vice versa. Instead of using OAM waves as second type of electromagnetic waves, LOS-MIMO can be used as well. Furthermore, a transformation between LOS-MIMO waves to OAM-waves and vice versa, is equally possible.

## Description

### Field

The present disclosure relates to a reflection device for wireless communication. The present disclosure also relates to a communication apparatus and a system comprising such a reflection device, and to a method for transmitting electromagnetic waves in a wireless communication system.

### Background

The upcoming sixth generation (6G) mobile communication system will use very high frequencies up to 140 GHz and beyond enabling high data rates at the expense of a limited range. Many antennas are required to guarantee good geographical coverage of the wireless communication system. To compensate the limited range of the high-frequency transmission signals, beamforming by phased array antennas will be applied to direct their transmission signal to a reception point where the signal is needed.

Wireless communication using EM waves carrying orbital angular momentum (OAM) has attracted increasing interest in recent years and its potential to increase channel capacity has been explored. An OAM wave is a type of EM wave with helical phase front. OAM waves carry additional angular momentum that is dependent on the field spatial distribution and independent of polarization. The angular momentum can be used for discriminating different OAM channels ('modes', 'states'). The phase front of OAM waves rotates around the wave propagation direction. Different modes with different angular momentum are indicated with an index l= ±1, ±2, etc. Different OAM modes can be spatially superimposed and propagate together over long distances. As a function of the number of used OAM modes, the capacity of Line-of-Sight (LOS) transmission channels grows almost linearly.

OAM waves offer a new mode domain of EM waves in addition to commonly used resources such as frequency, time, and space to satisfy continuously growing demand of transmission capacity in wireless networks. Consequently, OAM waves are interesting for communication systems because OAM waves open an additional path for multiplexing multiple data streams over the same frequency range by assigning different OAM modes. This allows for transmitting more information simultaneously without occupying more bandwidth in the frequency spectrum.

However, generating OAM waves remains a difficult task, and mainly plane waves continue to be employed in wireless communication.

It is, therefore, an objective of the present disclosure to provide means and a method for enabling versatility in the use of different waveforms for future wireless mobile communication systems.

### Description of the invention

According to a first aspect, the present disclosure suggests a reflection device for wireless communication systems configured to reflect impinging electromagnetic waves having a first type of waveform. The reflection device comprises multiple reflective elements and a control device for controlling the multiple reflective elements such that the multiple reflective elements reflect the impinging electromagnetic waves in a phase-controlled fashion into a selectable reflection angle and such that the reflected electromagnetic waves have a second type of waveform, which is different than the first type of waveform.

The device of the present disclosure enables transforming electromagnetic waves of one waveform type (e.g., plane wave) into electromagnetic waves of another waveform (e.g. OAM waves) using a controlled operation of multiple reflective elements.

The inventors have recognized that a reflection device implemented as an intelligent reflecting surface (IRS) device, also known as reconfigurable intelligent surface (RIS) device, can be controlled to not only redirect impinging electromagnetic waves, but also to achieve a transformation of the waveform. An IRS is typically made of a large number of electronically reconfigurable antenna elements forming reflective surfaces, that can be controlled with regard to the direction of reflecting incident electromagnetic (EM) waves, enabling a redirection of an incoming signal. Specifically, individual delays of the reflected EM waves are adjustable by the control device for the different reflective elements, to achieve beamforming and beam steering solely. However, according to the present disclosure, the capability that each reflecting element can be controlled to apply a specific desired phase shift applied to the reflected EM wave is used to transform the waveform of the impinging electromagnetic wave.

Thus, using the reflection device of the present invention, it becomes possible to, inter alia, transform a planar incoming EM wave as a first waveform into an OAM wave as a second waveform by regulating the phase shift of the reflected EM wave. Additionally, as is per se known, the reflection device is versatile to direct EM waves in selectable directions, which can be very useful for enabling communication with OAM waves in urban environments with tall buildings.

In particular application cases, thus, the reflection device achieves a conversion of plane waves in OAM waves and vice versa, providing an efficient means for integrating OAM waves into wireless communication systems.

In a preferred embodiment the reflection device is configured to control the multiple reflective elements such that several impinging antenna lobes of electromagnetic waves having the first type of waveform are reflected as a single antenna lobe of electromagnetic waves having the second type of waveform. In this case and, if the electromagnetic waves of the first type of waveform are plane waves, it is particularly advantageous when the reflection device is configured to reflect and transform the several antenna lobes of plane waves impinging on the reflection device into a single reflected antenna lobe of multi-mode OAM waves forming OAM beams. In the ideal case, each OAM beam has a conical shape (except for l = 0), and the OAM beams differ in radius depending on the mode I. Therefore, in the case of multi-mode OAM, there would be several overlapping cones of different radii. It could be that they together form a single lobe.

In another embodiment, the reflection device is additionally configured to control the multiple reflective elements such that a single impinging antenna lobe of electromagnetic waves having the second type of waveform is reflected as several antenna lobes of electromagnetic waves having the first type of waveform. This adds a complementary transformation function to the previous embodiment and may be particularly useful to achieve compatibility with existing mobile communication systems based on the transmission of planar EM waves.

In this latter case and if the electromagnetic waves of the first type of waveform are multi-mode OAM waves, it is advantageous when the reflection device is configured to reflect and transform the single antenna lobe of multi-mode OAM waves impinging on the reflection device into several reflected antenna lobes of plane waves. Due to channel reciprocity the number of modes of the multi-mode OAM waves corresponds to the number of antenna modes of plane waves. The plane waves are suitable to be received by user devices. The multi-mode OAM waves advantageously transmit several communication channels and may thus allow using a smaller bandwidth in the frequency spectrum.

According to a second aspect of the disclosure a wireless communication apparatus for a transmitter side of a wireless communication system is suggested. The wireless communication apparatus comprises a reflection device according to the first aspect of the present disclosure and transmitter means. The transmitter means comprise an antenna for transmitting electromagnetic waves of a first or second type of waveform towards the reflection device.

According to an embodiment of the wireless communication apparatus, the antenna is selected from a group comprising e.g. a dipole antenna, a spiral phase plate antenna, a uniform circular array antenna, and a metastructure antenna. The type of antenna is selected according to the type of EM waves for transmission to the reflection device.

In a preferred embodiment, the transmitter means is a multiple-input-multiple-output (MIMO) array. This type of transmitter means enables transmission of several communication channels in a directed manner. MIMO transmission arrangements can advantageously be combined with multi-mode OAM waves which are also appropriate for carrying several communication channels.

According to a third aspect the present disclosure suggests a communication apparatus for the receiver side of a wireless communication system. The wireless communication apparatus comprises a reflection device according to the first aspect of the present disclosure and receiver means with an antenna. The antenna is configured for receiving electromagnetic waves of a first or second type of waveform from the reflection device.

The wireless communication apparatus according to the third aspect complements the wireless communication apparatus according to the second aspect and realizes corresponding advantages. The antenna may be selected from a group comprising e.g. a dipole antenna, a spiral phase plate, and a uniform circular array.

Advantageously the wireless communication apparatuses according to the second and third aspect of the present invention can be combined to form a wireless communication system.

According to a fourth aspect, the present disclosure suggests a method for transmitting electromagnetic waves in a wireless communication system. The method comprises
- receiving (S1) electromagnetic waves of a first type of waveform impinging on a reflection device comprising an array of controllable reflective elements,
- performing (S2) phase control of the controllable reflective elements for
   (i) reflecting (S3) the impinging electromagnetic waves in a phase-controlled fashion into a selectable reflection angle, and
   (ii) transforming (S4) the first type of waveform of the impinging electromagnetic waves into a second type of waveform of the reflected electromagnetic waves, wherein the second type of waveform is different from the first type of waveform.

The suggested method is particularly advantageous to be implemented in a wireless communication system that implements transformation of EM waves of a first waveform into second waveform.

In an advantageous embodiment the method also includes performing (S5) phase control of the reflective elements to transform a single antenna lobe of multi-mode OAM waves into several antenna lobes of plane waves.

In an alternative embodiment the method includes performing (S6) phase control of the reflective elements to transform multiple antenna lobes of plane waves into a single antenna lobe of multi-mode OAM waves.

According to a further embodiment of the method each of the individual reflective elements of the reflection device is configured and controlled to apply to the impinging waves, instead of a specific phase shift, a true time delay. This embodiment relates to the fact that the proposed method works not only by means of phase shifters, but also with 'true time delays'.

In yet another embodiment of the method wherein each of the individual reflective elements of the reflection device is configured and controlled to apply to the impinging waves a combination of a specific phase shift and a specific true time delay. In some applications a combination of phase shifters and true time delays is useful.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a first embodiment of a communication system according to the present disclosure;
- Fig. 2: an embodiment of a receiver side of a communication system according to the present disclosure;
- Fig. 3: an embodiment of a transmitter side 301 of a communication system according to the present disclosure; and
- Fig. 4: a flow diagram of a method of controlling transmission of electromagnetic waves in a wireless communication system.

### Detailed description

In the present description, the terms "transmission signal", "antenna beam", "signal channel", and "channel" are used synonymously. Likewise, the terms "reflection device" and "(intelligent) reflective surface" are used synonymously. The term "OAM beam" and "beam of plane waves" is used to designate directed transmission or reflection of OAM wave and plane waves, respectively.

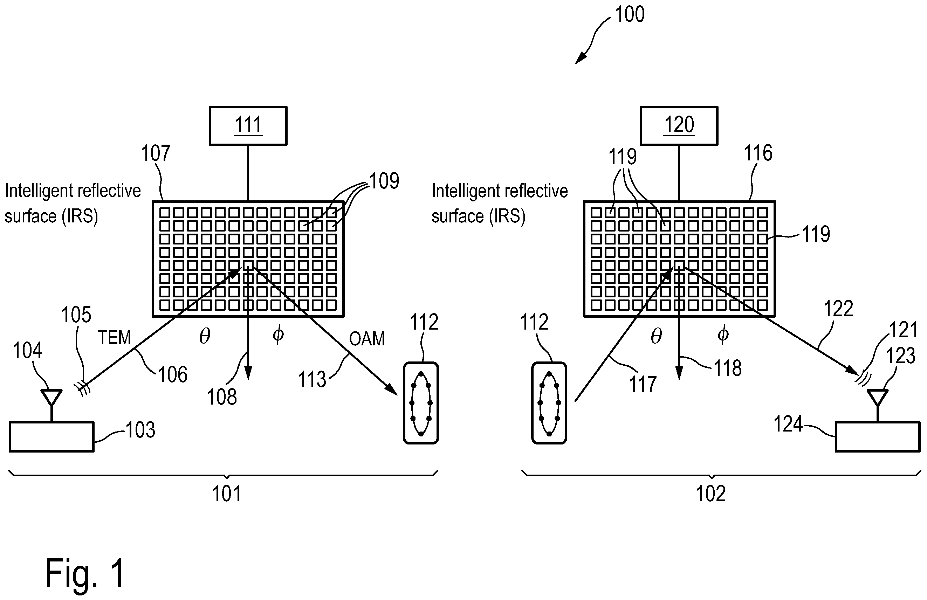

Figure 1 illustrates a first embodiment of a communication system 100 comprising a transmitter side 101 and a receiver side 102. The transmitter side 101 represents the origin of EM waves used for wirelessly transmitting data to one or several receiving destinations.

The transmitter side 101 comprises a base station 103 and an antenna 104 for transmitting plane waves 105. The propagation direction of the plane waves 105 is shown as arrow 106. The propagation direction 106 of the plane wave fronts is perpendicularly oriented relative to the wave fronts. For the sake of completeness, it is noted that the antenna 104 can be an antenna array configured to emit EM waves as an antenna lobe into a predefined direction. The plane waves 105 impinge on an IRS device 107 with an angle of incidence θ relative to a normal direction 108. The term "normal direction" is to be understood in the sense of a perpendicular orientation relative to a main surface of the IRS device 107. The IRS device 107 comprises a plurality of reflective elements 109, which are arranged in a two-dimensional array. A control device 111 is connected with the IRS device 107 and enables controlling the individual reflective elements 109 of the IRS device 107 such that a desired phase shift is applied to the EM waves reflected by the corresponding reflective element 109. As a result, an angle of reflection ϕ of the reflected electromagnetic waves can be adjusted. At the same time, the IRS device 107 is suitable for transforming a waveform of incident EM waves into a different electromagnetic waveform solely by defining the phase shift between individual reflective elements 109 accordingly. In the embodiment shown in Figure 1, incident plane waves 105 are transformed into OAM waves 112. The OAM waves 112 propagate into propagation direction 113 towards a destination where the OAM waves 112 shall be received. Thus, the IRS device 107 defines both, the type of wave form of the reflected EM waves (OAM, plane waves or any other suitable waveform) and, their direction by controlling the phase shift applied to the reflected EM waves.

In the embodiment of Figure 1, the plane waves 105 represent only a single beam corresponding to a single signal channel. The incident plane waves are transformed into a single mode OAM beam 112 that carries only a single signal channel.

On the receiver side 102 of the communication system 100, the incident OAM waves 112 impinge on an IRS device 116 at the angle of incidence θ. The propagation direction of the incident OAM waves 112 is shown as arrow 117. The normal direction of the IRS device 116 is indicated as arrow 118. Like the IRS device 107, the IRS device 116 comprises reflective elements 119, which are arranged in a two-dimensional array. Each reflective element 119 reflects a portion of the incoming OAM waves 112, wherein a control device 120 determines a phase shift between waves reflected by individual reflective elements 119. The control device 120 is configured to control the IRS device 116 such that the incident OAM waves 112 are transformed into plane waves 121 at an angle of reflection ϕ. The resulting propagation direction of the reflected plane waves 121 is indicated by arrow 122. Like the IRS device 107, the IRS device 116 determines the angle of reflection of the reflected waves and the type of waveform of the reflected waves. The reflected plane waves 121 are received by an antenna 123 connected with base station 124. The antenna 123 can be an antenna array that predominantly receives electromagnetic waves received at a predefined limited range of reception angles while electromagnetic waves received outside this predefined range of reception angles are essentially not detected.

It is noted that IRS 116 can also perform transformation between different OAM modes. I.e. it is capable of receiving OAM mode l and transmitting OAM mode k, wherein l and k are different integers.

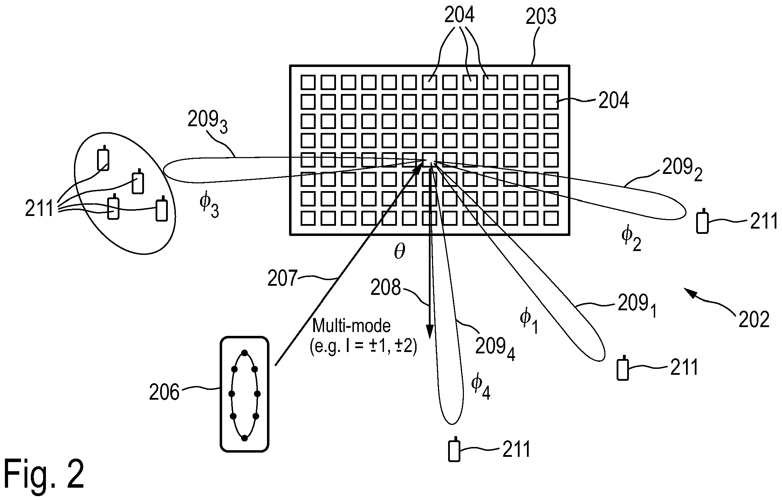

Figure 2 shows another example of an embodiment of a receiver side 202 of a communication system according to the present disclosure. An IRS device 203 with individual reflective elements 204 receives impinging multi-mode OAM waves 206 (i.e. multiple OAM modes each one having a different angular momentum l = ±1, ±2) at an angle of incidence θ. The propagation direction of OAM waves 206 is indicated by arrow 207, wherein the normal direction is indicated as arrow 208. The IRS device 203 transforms each OAM mode of the multi-mode OAM waves 206 into several antenna lobes 209₁-209₄ of plane waves. The antenna lobes 209₁-209₄ are directed into different reflection angles φ1- φ4 to several users or groups of users employing wireless user equipment 211 such as smart phones or other mobile communication devices.

Optionally, the IRS device 203 reflects one or several of the incident OAM modes as OAM waves. For instance, since the OAM waves 206 comprise four modes, namely l = ±1, ±2, three of which (I = ±1, +2) could be transformed into plane waves forming antenna lobes 209₁-209₃, and the forth mode (I = -2) could be reflected as single mode OAM waves into reflection angle φ4. This is only one example and other transformation schemes of the incident multi-mode OAM waves 206 are conceivable as well, for instance l = 1, -3, 4, 5.

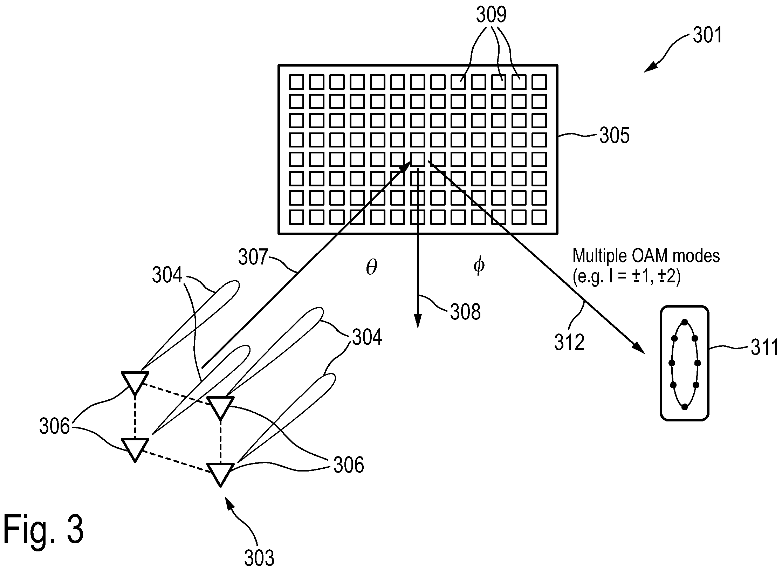

Figure 3 illustrates an embodiment of a transmitter side 301 of a communication system according to the present disclosure. A Line-of-Sight (LoS) MIMO (multiple input multiple output) array 303 transmits in a directed fashion four beams (streams) of plane waves 304 towards an IRS device 305. To this end, the LoS MIMO array 303 comprises four antennas 306. It is noted that in other embodiments the LoS MIMO array 303 is provided with fewer or more than four antennas 306 and/or transmits fewer or more than four beams (streams) of plane waves or antenna lobes 304. Each beam of plane waves 304 carries one communication channel that is independent from the other beams of plane waves 304. The propagation direction of the beams of plane waves/antenna lobes 304 is indicated by arrow 307. Arrow 308 indicates the normal direction relative to the main surface of the IRS device 305. The antenna lobes 304 impinge at an angle of incidence θ on an IRS device 305. Reflective elements 309 of the IRS device 305 reflect the incident plane waves 304 into reflection angle φ as OAM waves 311 with four different OAM modes having different angular momentums, namely l = ±1, ±2. The IRS device 305 is provided with a control device (not shown in Figure 3) for controlling the phase shift of the individual reflective elements 309 or more specifically the phase shift transmitted from the reflective elements 309 to the reflected EM waves.

The IRS devices 203 and 305 enable IRS-assisted transformation of plane waves in single or multi-mode OAM waves and vice versa, wherein each mode of OAM waves is identified as an OAM beam. Due to channel reciprocity, each beam of plane waves translates into one mode of an OAM beam. The OAM modes with different angular momentums can be discriminated at a receiver side (not shown in Figure 3) of the communication system. Preferably, this discrimination is performed again by an IRS device.

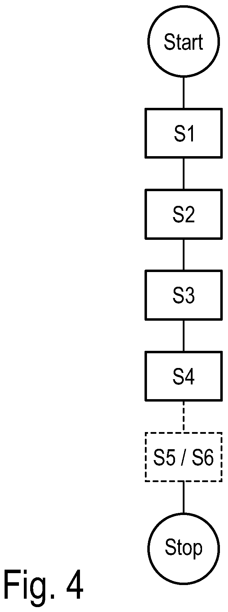

Figure 4 is a schematic flow diagram of a method for transmitting of EM waves according to the present disclosure. The EM waves are transmitted in a wireless communication system. The method comprises in a first step S1 receiving EM waves of a first type of waveform impinging on an IRS device. In step S2, phase control of the reflective elements is performed such that the individual reflective elements reflect the impinging EM waves in a phase-controlled fashion into a selectable reflection angle (step S3). At the same time transformation (step S4) of the first type of waveform of the impinging EM waves into a second type of waveform of the reflected EM waves is performed, wherein the second type of waveform is different from the first type of waveform. It is noted, that controlling the angle of reflection and transformation of the type of waveform according to steps S3 and S4 are performed simultaneously by phase control of the reflective surfaces of the reflective elements according to step S2.

Optionally, the method performs phase control of the reflective elements to transform a single antenna lobe of multi-mode OAM waves 206 into several antenna lobes formed by plane waves 209₁-209₄ (step S5) or, alternatively, to transform multiple antenna lobes 304 formed by plane waves into a single antenna lobe 312 formed by multi-mode OAM waves 206 (step S6). Since steps S5 and S6 are only optional, they are shown in Figure 4 with dashed lines.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | Wireless communication system | 301 | Transmitter side |
| 101 | Transmitter side | 303 | LoS MIMO array |
| 102 | Receiver side | 304 | Plane wave |
| 103 | Base station | 305 | IRS device |
| 104 | Antenna | 306 | Antenna |
| 105 | Plane waves | 307 | Propagation direction |
| 106 | Propagation direction | 308 | Normal direction |
| 107 | IRS device | 309 | Reflective elements |
| 108 | Normal direction | 311 | OAM wave |
| 109 | Reflective elements | 312 | Propagation direction |
| 111 | Controller | | |
| 112 | OAM wave | | |
| 113 | Propagation direction | | |
| 116 | IRS device | | |
| 117 | Propagation direction (incident) | | |
| 118 | Normal direction | | |
| 119 | Reflective element | | |
| 120 | Control device | | |
| 121 | Plane waves | | |
| 122 | Propagation direction (reflected) | | |
| 202 | Receiver side | | |
| 203 | IRS device | | |
| 204 | Reflective elements | | |
| 206 | OAM wave | | |
| 207 | Arrow | | |
| 208 | Normal direction | | |
| 209 | Plane waves | | |
| 211 | User equipment | | |

## Claims

1. Reflection device for wireless communication configured to reflect impinging electromagnetic waves having a first type of waveform, wherein the reflection device (107,116,203,305) comprises multiple reflective elements (109,119,204,309) and a control device (111,120) for controlling the multiple reflective elements such that the multiple reflective elements reflect the impinging electromagnetic waves in a phase controlled fashion into a selectable reflection angle (φ,φ1-φ4) and such that the reflected electromagnetic waves have a second type of waveform, which is different than the first type of waveform.

2. Reflection device according to claim 1, wherein the reflection device (107,116,203,305) is configured to control the multiple reflective elements such that several impinging antenna lobes of electromagnetic waves having the first type of waveform are reflected as a single antenna lobe of electromagnetic waves having the second type of waveform.

3. Reflection device according to claim 2, wherein the electromagnetic waves of the first type of waveform are plane waves, and wherein the reflection device is configured to reflect and transform the several antenna lobes (304) of plane waves impinging on the reflection device into a single reflected antenna lobe of multi-mode OAM waves.

4. Reflection device according to claim 1, wherein the reflection device (107,116,203,305) is configured to control the multiple reflective elements such that a single impinging antenna lobe of electromagnetic waves having the second type of waveform is reflected as several antenna lobes (209₁-209₄) of electromagnetic waves having the first type of waveform.

5. Reflection device according to claim 4, wherein the electromagnetic waves of the first type of waveform are multi-mode OAM waves, and wherein the reflection device is configured to reflect and transform the single antenna lobe of multi-mode OAM waves impinging on the reflection device into a several reflected antenna lobes of plane waves.

6. Wireless communication apparatus comprising a reflection device according to one of claims 1 to 5 and transmitter means (103,303) comprising an antenna (104, 306) for transmitting electromagnetic waves of a first or second type of waveform towards the reflection device (107,116,203,305).

7. Wireless communication apparatus according to claim 6, wherein the antenna (104, 306) is selected from a group comprising a dipole antenna, a spiral phase plate, a uniform circular array, and a metastructure.

8. Wireless communication apparatus according to claim 7, wherein the transmitter means (303) is a line-of-sight (LoS) multiple-input-multiple-output (MIMO) array.

9. Wireless communication apparatus comprising a reflection device according to one of claims 1 to 5 and receiver means (124) comprising an antenna (123) for receiving electromagnetic waves of a first or second type of waveform from the reflection device (107,116,203,305).

10. Wireless communication apparatus according to claim 9, wherein the antenna (123) is selected from a group comprising a dipole antenna, a spiral phase plate, and a uniform circular array.

11. Wireless communication system comprising a wireless communication apparatus according to claims 6 to 8 forming a transmitter side (101) and a wireless communication apparatus according to claims 9 or 10 forming a receiver side (102) of the wireless communication system.

12. Method for transmitting electromagnetic waves in a wireless communication system comprising
- receiving (S1) electromagnetic waves of a first type of waveform impinging on a reflection device comprising an array of controllable reflective elements,
- performing (S2) phase control of the controllable reflective elements for
(i) reflecting (S3) the impinging electromagnetic waves in a phase-controlled fashion into a selectable reflection angle, and
(ii) transforming (S4) the first type of waveform of the impinging electromagnetic waves into a second type of waveform of the reflected electromagnetic waves, wherein the second type of waveform is different from the first type of waveform.

13. Method according to claim 12, further comprising
- performing (S5) phase control of the reflective elements to transform a single antenna lobe of multi-mode OAM waves into several antenna lobes of plane waves.

14. Method according to claim 12, further comprising
- performing (S6) phase control of the reflective elements to transform multiple antenna lobes of plane waves into a single antenna lobe multi-mode OAM waves.

15. Method according to claims 12 to 14, wherein each of the individual reflective elements (109,119,204,309) of the reflection device (111,120) is configured and controlled to apply to the impinging waves, a combination of a specific phase shift and, a specific true time delay, or, a true time delay only.
